# EUROPÄISCHE PATENTSCHRIFT

(11) **EP 2 879 896 B1**
(45) Veröffentlichungstag und Bekanntmachung des Hinweises auf die Patenterteilung: **26.04.2017**
(21) Anmeldenummer: 13740272.3
(22) Anmeldetag: 23.07.2013
(51) Int. Cl.: B60K 37/06, G06F 3/14

(54) **ANZEIGE- UND BEDIENEINRICHTUNG UND VERFAHREN ZUR ANSTEUERUNG EINER ANZEIGE- UND BEDIENEINRICHTUNG**
DISPLAYING AND OPERATING DEVICE AND METHOD FOR CONTROLLING A DISPLAYING AND OPERATING DEVICE
DISPOSITIF DE COMMANDE ET D'AFFICHAGE AINSI QUE PROCÉDÉ POUR LA COMMANDE D'UN DISPOSITIF DE COMMANDE ET D'AFFICHAGE

(30) Priorität: 01.08.2012 DE 102012015255
(43) Veröffentlichungstag der Anmeldung: 10.06.2015
(73) Patentinhaber: Volkswagen Aktiengesellschaft, 38440 Wolfsburg (DE)
(72) Erfinder: WOJZISCHKE, Christoph, 38116 Braunschweig (DE)
(86) Internationale Anmeldenummer: PCT/EP2013/065467
(87) Internationale Veröffentlichungsnummer: WO 2014/019884

(56) Entgegenhaltungen:
- DE-A1-102006 037 156

## Beschreibung

Die Erfindung betrifft eine Anzeige- und Bedieneinrichtung und ein Verfahren zur Ansteuerung einer Anzeige- und Bedieneinrichtung.

Aus der WO 2007/107368 A1 ist eine Anzeige- und Bedieneinrichtung bekannt, umfassend eine Anzeigeeinheit und eine Annäherungssensorik, wobei mittels der Annäherungssensorik ein Eindringen eines Objekts in mindestens einen Überwachungsraum erfassbar ist, wobei mindestens eine Darstellung auf der Anzeigeeinheit in Abhängigkeit eines eindringenden Objekts verändert wird. Dabei ist offenbart, dass bei der Erfassung eines Objekts eine Darstellung auf der Anzeigeeinheit umgeschaltet wird, sodass beispielsweise ein Bedienfeld vergrößert dargestellt wird, um eine nachfolgende Bedienung zu vereinfachen. Dabei kann die auslösende Bedingung für die Bedienfunktion je nach verwendeter Technologie unterschiedlich sein. So kann beispielsweise die Anzeigeeinheit als Touchscreen ausgebildet sein, sodass bei einer Berührung die Bedienfunktion ausgeführt wird. Alternativ kann die Bedienfunktion auch berührungslos ausgelöst werden, beispielsweise dass bei einer ersten Annäherung das Bedienfeld vergrößert wird und bei einer weiteren Annäherung ausgelöst wird.

Ferner beschreibt die gattungsbildende DE 10 2006 037 156 A1 ein Verfahren zum Betrieb einer interaktiven Bedienvorrichtung mit einer Anzeigevorrichtung. Dabei werden Informationen auf der Anzeigevorrichtung angezeigt und eine Bedienaktion wird aktiviert, wenn ein Körperteil eines Nutzers in einem bestimmten Aktivierungsbereich detektiert wird. Dabei wird zeitlich vor dem Aktivieren der Bedienaktion eine Bedienabsicht erfasst und die Darstellung des relevanten Bedienelements für das Aktivieren der im zugeordneten Bedienaktion wird optimiert dargestellt. Beispielsweise können mehrere Bedienelemente angezeigt werden, wobei das Bedienelement, an das sich der Nutzer annähert, vergrößert dargestellt wird.

Der Erfindung liegt das technische Problem zugrunde, eine gattungsgemäße Anzeige- und Bedieneinrichtung zu schaffen sowie ein Verfahren zur Ansteuerung einer solchen Anzeige- und Bedieneinrichtung zu schaffen, bei denen Fehlfunktionen reduziert werden.

Die Lösung des technischen Problems ergibt sich durch die Gegenstände mit den Merkmalen der Ansprüche 1 und 9. Weitere vorteilhafte Ausgestaltungen ergeben sich aus den Unteransprüchen.

Hierzu umfasst die Anzeige- und Bedieneinrichtung eine Anzeigeeinheit und mindestens eine Annäherungssensorik, wobei mittels der Annäherungssensorik ein Eindringen eines Objekts in mindestens einen Überwachungsraum erfassbar ist, wobei mindestens eine Darstellung auf der Anzeigeeinheit in Abhängigkeit eines eindringenden Objekts verändert wird, wobei die zeitliche Abfolge von Empfangssignalen der Annäherungssensorik von einer Einheit ausgewertet wird, wobei ein gleich bleibendes Empfangssignal innerhalb eines vorgegebenen Zeitintervalls erfasst und gespeichert wird und für eine nachfolgende Ansteuerung der Anzeigeeinheit ignoriert wird, wobei eine Änderung der Darstellung nur durchgeführt wird, wenn ein nachfolgendes Empfangssignal das statische Empfangssignal um einen vorgegebenen Wert überschreitet. Anschaulich wird ein statisches Objekt, wie beispielsweise eine abgestellte Kaffeetasse, ein Kratzer oder Schmutz auf der Annäherungssensorik erkannt und nach der vorgegebenen Zeit ignoriert. Somit wird verhindert, dass es permanent zu einer nicht gewünschten Darstellung auf der Anzeigeeinheit kommt, was die Nutzerakzeptanz reduzieren würde. Die vorgegebene Zeit kann dabei beispielsweise zwischen 10 und 120 Sekunden, vorzugsweise zwischen 40 bis 80 Sekunden, liegen. Die Erfindung lässt sich dabei mit verschiedensten Technologien für eine Annäherungssensorik realisieren wie beispielsweise Infrarot (IR), Ultraschall, HF oder auch optisch mittels einer Kamera. Die Auslösung einer Bedienung kann ebenfalls unterschiedlich gestaltet sein. So kann die Anzeigeeinheit als Touchscreen ausgebildet sein oder aber über die Annäherungssensorik oder eine weitere Annäherungssensorik erfolgen. Die Einheit zur Auswertung der Empfangssignale kann dabei eine separate der Annäherungssensorik zugeordnete Einheit sein oder aber in eine Steuereinheit der Anzeigeeinheit integriert sein. Der vorgegebene Wert für die Vergrößerung kann ein absoluter oder relativer Wert (z.B. 5 %) im Vergleich zum statischen Empfangssignal sein.

In einer Ausführungsform wird bei einer Verkleinerung des Empfangssignals gegenüber einem zuvor erfassten statischen Empfangssignal um einen vorgegebenen Wert der zuvor erfasste statische Wert gelöscht. Wird beispielsweise eine zuvor abgestellte Kaffeetasse, die als statisches Objekt ignoriert wird, um ein vorgegebenes Maß von der Annäherungssensorik entfernt, sodass das Empfangssignal sich um den vorgegebenen Wert verkleinert, so wird die Kaffeetasse anschließend wieder als Objekt bzw. das von ihr resultierende Empfangssignal wieder berücksichtigt. Somit wird sichergestellt, dass die Ignorierung von Empfangssignalen zurückgesetzt werden kann.

In einer weiteren Ausführungsform überwacht die Annäherungssensorik genau einen Überwachungsraum. Dies stellt eine sehr einfache und robuste Ausführungsform dar. Prinzipiell kann auch vorgesehen sein, dass die Annäherungssensorik mehrere voneinander getrennte Überwachungsräume hat. Insbesondere bei IR- oder UV-Annäherungssensoriken ist somit eine gewisse räumliche Erkennung eines eindringenden Objekts möglich.

In einer weiteren Ausführungsform ist die Annäherungssensorik als IR-Annäherungssensorik ausgebildet.

In einer weiteren Ausführungsform umfasst die Annäherungssensorik eine Sichtblende mit einer Optik, die auch als integrierte bauliche Einheit ausgebildet sein können.

In einer weiteren Ausführungsform ist die Optik derart ausgebildet, dass emittierte IR-Strahlung in den Überwachungsraum gestreut und empfangene IR-Strahlung zu mindestens einer Empfangseinrichtung geleitet wird. Somit kann mit wenigen IR-Sendedioden ein großer Überwachungsraum abgetastet werden, deren Signale mit wenigen IR-Empfangsdioden (im Extremfall nur eine einzige) ausgewertet werden.

In einer weiteren Ausführungsform umfasst die Annäherungssensorik eine Referenzdiode, mittels derer beispielsweise thermische Veränderungen der Emission der IR-Sendedioden ableitbar sind.

In einer weiteren Ausführungsform wird auf der Anzeigeeinheit in Abhängigkeit von einem eindringenden Objekt von einer Anzeigedarstellung auf eine Bediendarstellung gewechselt.

Dabei wird auf der Bediendarstellung mindestens ein Bedienfeld gegenüber der Anzeigedarstellung größer dargestellt oder gar erstmalig angezeigt.

Die Erfindung wird nachfolgend anhand eines bevorzugten Ausführungsbeispiels näher erläutert. Die Fig. zeigen:
- Fig. 1: eine schematische Darstellung einer Anzeige- und Bedieneinrichtung,
- Fig. 2: eine Schnittdarstellung einer Annäherungssensorik in einer ersten Ausführungsform und
- Fig. 3: eine Schnittdarstellung einer Annäherungssensorik in einer zweiten Ausführungsform.

Die Anzeige- und Bedieneinrichtung 1 umfasst eine Anzeigeeinheit 2 und eine Annäherungssensorik 3. Die Anzeigeeinheit 2 ist beispielsweise als Touchscreen ausgebildet. Des Weiteren umfasst die Anzeige- und Bedieneinrichtung 1 eine Einheit 4 und eine Steuereinheit 5. Die Annäherungssensorik 3 ist derart ausgebildet, dass diese einen

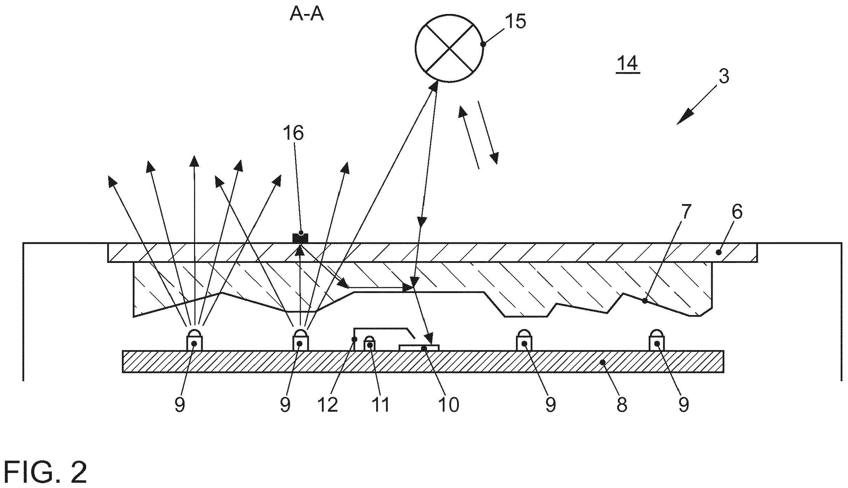

Überwachungsraum 14 (siehe Fig. 2) vor der Anzeigeeinheit 2 auf eindringende Objekte 15 (siehe Fig. 2), wie beispielsweise den Finger einer Bedienperson, überwacht. Hierzu emittiert die Annäherungssensorik 3 IR-Strahlung und empfängt von Objekten reflektierte IR-Strahlung. Die empfangene IR-Strahlung wird in der Einheit 4 ausgewertet und ein Auswertungsergebnis an die Steuereinheit 5 übermittelt. Die Steuereinheit 5 steuert dann die Anzeigeeinheit 2 an, wobei je nach Auswerteergebnis eine Darstellung auf der Anzeigeeinheit 2 geändert wird oder nicht.

Die Auswertung soll nun anhand der Fig. 2 erläutert werden. Die Annäherungssensorik 3 umfasst eine Sichtblende 6, eine Optik 7 und eine Leiterplatte 8, auf der IR-Sendedioden 9, eine IR-Empfangsdiode 10 und eine Referenzdiode 11 mit einer Abschirmung 12 angeordnet sind. Die Optik 7 ist dabei derart ausgebildet, dass von den IR-Sendedioden 9 emittierte IR-Strahlung gestreut wird. Andererseits hat die Optik 7 die Funktion eines Lichtwellenleiters, die über die Sichtblende 6 auf die Optik 7 auftreffende IR-Strahlung bevorzugt zur Empfangsdiode 10 zu leiten. Anschaulich integriert die IR-Empfangsdiode 10 sämtliche IR-Strahlung aus dem Überwachungsraum 14 auf, die aus dem Überwachungsraum 14 auf die Sichtblende 6 fällt.

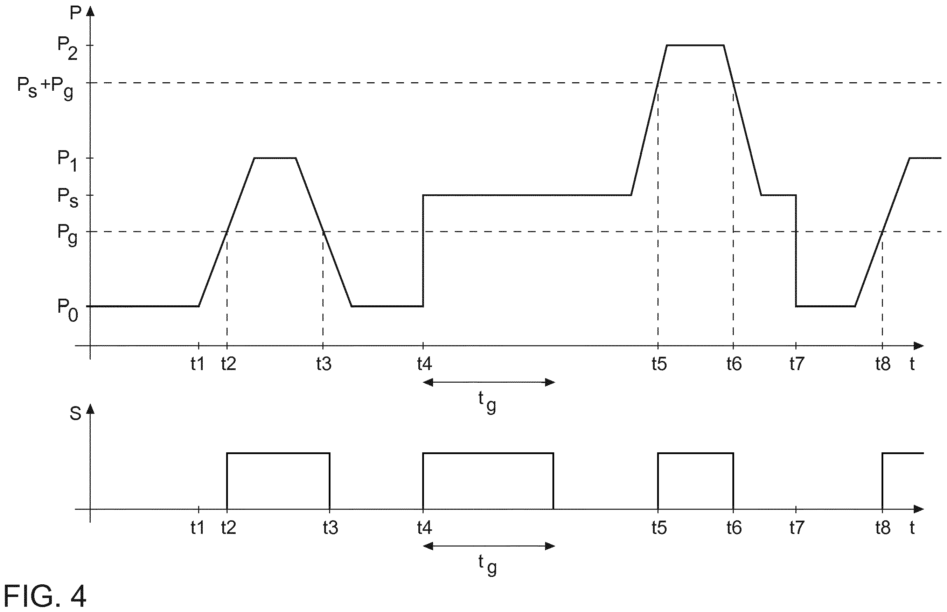

Anhand von Fig. 4 soll der Ablauf exemplarisch erläutert werden, wobei ein Pegel P des Empfangssignals beispielsweise in Lux über der Zeit t dargestellt ist.

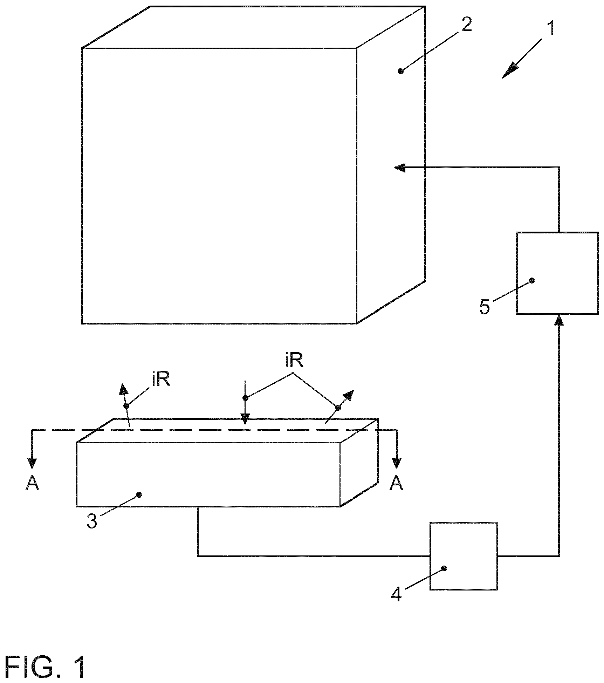

Sei nun angenommen, dass sich zunächst kein Objekt 15 im Überwachungsraum 14 aufhält, so empfängt die IR-Empfangsdiode 10 keine IR-Strahlung (bei Vernachlässigung von Rückstreuung an der Optik 7 und der Sichtblende 6). Bewegt sich dann zum Zeitpunkt t1 ein Objekt 15 in den Überwachungsraum 14, so wird an diesem IR-Strahlung reflektiert und die empfangene IR-Strahlung an der IR-Empfangsdiode 10 steigt. War das Empfangssignal P an der IR-Empfangsdiode 10 beispielsweise ohne Objekt 15 P0, so steigt nun das Empfangssignal P auf einen Pegel P1. Überschreitet dann das Empfangssignal P einen Anstieg zum Pegel P1 einen vorgegebenen Wert Pg zum Zeitpunkt t2, so erzeugt die Einheit 4 (siehe Fig. 1) ein Signal S für die Steuereinheit 5, dass ein sich annäherndes Objekt 15 erfasst wurde. Sinkt der Pegel des Empfangssignals P aufgrund des Objekts 15 (beispielsweise weil eine Hand als Objekt 15 zurückgezogen wird) zum Zeitpunkt t3 unter den vorgegebenen Wert Pg, so wird das Steuersignal S zurückgesetzt. Dabei sei angemerkt, dass bei dieser Ausbildung die IR-Empfangsdiode 10 nicht unterscheiden kann, wo und wie viele Objekte 15 in dem Überwachungsraum 14 sind. Gelangt nun beispielsweise zum Zeitpunkt t4 ein Schmutzpartikel 16 auf die Sichtblende 6, so erhöht sich an diesem die Reflexion und der Pegel des Empfangssignals P an der IR-Empfangsdiode 10 steigt, d.h. der Schmutzpartikel 16 hat die gleiche Wirkung wie ein in den Überwachungsraum 14 eindringendes Objekt. Dabei sei angenommen, dass der durch das Schmutzpartikel 16 hervorgerufene Pegel Ps sei. Ist Ps > Pg, würde dies dazu führen, dass permanent ein entsprechendes Signal S an die Steuereinheit 5 übertragen wird. Um dies nun zu verhindern, wertet die Einheit 4 die zeitliche Abfolge der Empfangssignale P aus. Erfasst nun die Einheit 4 innerhalb eines vorgegebenen Zeitintervalls tg von beispielsweise 60 Sekunden einen konstanten Pegel Ps, so wird dieser konstante Pegel Ps als von einem "statischen Objekt" herrührend aufgefasst. Nach der vorgegebenen Zeit ignoriert dann die Einheit 4 diesen konstanten Pegel Ps und das Steuersignal S wird zurückgesetzt. Dies kann beispielsweise dadurch erfolgen, dass dieser konstante Pegel Ps auf den vorgegebenen Wert Pg aufaddiert wird, sodass nachfolgend von der Einheit 4 nur noch ein Steuersignal für die Steuereinheit 5 erzeugt wird, wenn ein eindringendes Objekt 15 an der IR-Empfangsdiode 10 einen Pegel P2 > Pg + Ps erzeugt. Das Übersteigen des Pegels Pg + Ps zum Zeitpunkt t5 und das Absinken unter Pg + Ps zum Zeitpunkt t6 ist dabei beispielhaft dargestellt. Wird der Schutzpartikel 16 zum Zeitpunkt t7 entfernt, so erfasst die Einheit 4 dies und setzt den vorgegebenen Wert wieder auf Pg zurück. Entsprechend wird der vorgegebene Wert wieder auf Pg zurückgesetzt, wenn sich das zuvor erfasste Empfangssignal Ps des statischen Objekts reduziert bzw. verkleinert. Auch in diesem Fall wertet dies die Einheit 4 als Entfernung des "statischen Objekts" und setzt den vorgegebenen Wert auf Pg zurück. Daher wird zum Zeitpunkt t8 bei Überschreitung von Pg wieder ein Signal S erzeugt. Bei der Verkleinerung wird dabei vorzugsweise ein Wert vorgegeben (absolut oder relativ), um den sich der Pegel reduzieren muss, um Ps wieder zu löschen, damit nicht jede Variation im Empfangssignal zur Löschung führt.

Die Emission der IR-Sendedioden 9 ist beispielsweise auch abhängig von der Umgebungstemperatur. Entsprechend ist auch die Größe des Empfangssignals der IR-Empfangsdiode 10 temperaturabhängig. Um die unterschiedliche Sendecharakteristik der IR-Sendedioden 9 zu berücksichtigen, ist die Referenzdiode 11 vorgesehen. Diese ist gleich aufgebaut wie die IR-Sendedioden 9, sodass die Sendecharakteristik ebenfalls gleich ist. Werden dann beispielsweise die IR-Sendedioden 9 mit PWM-Signalen angesteuert, so wird die Referenzdiode 11 in den Pulspausen angesteuert, in denen auch keine reflektierte Strahlung von Objekten mehr erwartet wird. Aus den Empfangssignalen an der IR-Empfangsdiode 10 aufgrund der Emission der Referenzdiode 11 kann dann auf die Emissionscharakteristik der IR-Sendedioden 9 zurückgeschlossen werden und beispielsweise der vorgegebene Wert Pg angepasst werden. Die Abschirmung 12 verhindert dabei, dass IR-Strahlung von der Referenzdiode 11 nach außen abgestrahlt wird.

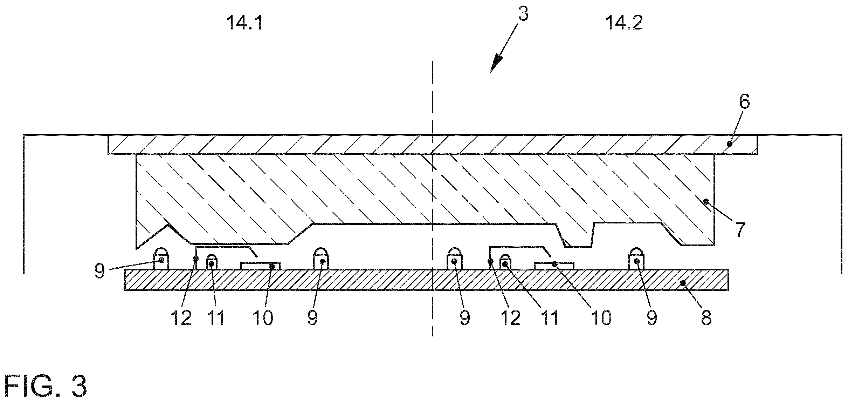

In der Fig. 3 ist eine alternative Ausführungsform dargestellt. Dabei werden gleiche Elemente wie in Fig. 2 mit gleichen Bezugszeichen versehen. Der wesentliche Unterschied zur Fig. 2 ist, dass die Annäherungssensorik 3 zwei IR-Empfangsdioden 10 mitjeweiliger Referenzdiode 11 aufweist, sodass zwei Überwachungsbereiche 14.1, 14.2 existieren. In diesem Fall kann das zuvor beschriebene Verfahren getrennt für jeden Überwachungsbereich 14.1, 14.2 durchgeführt werden, sodass beispielsweise ein "statisches Objekt" im ersten Überwachungsbereich 14.1 keinen Einfluss auf eine Objekterfassung im zweiten Überwachungsbereich 14.2 hat.

## Patentansprüche

1. Anzeige- und Bedieneinrichtung (1), umfassend eine Anzeigeeinheit (2) und mindestens eine Annäherungssensorik (3), wobei mittels der Annäherungssensorik (3) ein Eindringen eines Objekts (15) in mindestens einen Überwachungsraum (14) erfassbar ist, wobei mindestens eine Darstellung auf der Anzeigeeinheit (2) in Abhängigkeit eines eindringenden Objektes (15) verändert wird,
**dadurch gekennzeichnet, dass**
die Anzeige- und Bedieneinrichtung (1) eine Einheit (4) umfasst, die derart ausgestaltet ist, dass eine zeitliche Abfolge von Empfangssignalen (P) der Annäherungssensorik (3) von der Einheit (4) ausgewertet wird, wobei ein gleichbleibendes Empfangssignal (P) innerhalb eines vorgegebenen Zeitintervalls (tg) erfasst und gespeichert wird und für eine nachfolgende Ansteuerung als statisches Empfangssignal (Ps) der Anzeigeeinheit (2) ignoriert wird, wobei eine Änderung der Darstellung nur durchgeführt wird, wenn ein nachfolgendes Empfangssignal (P) das statische Empfangssignal (Ps) um einen vorgegebenen Wert überschreitet.

2. Anzeige- und Bedieneinrichtung nach Anspruch 1, **dadurch gekennzeichnet, dass** die Einheit (4) derart ausgebildet ist, dass bei einer Verkleinerung des Empfangssignals (P) gegenüber einem zuvor erfassten statischen Empfangssignal (Ps) um einen vorgegebenen Wert der zuvor erfasste statische Wert gelöscht wird.

3. Anzeige- und Bedieneinrichtung nach Anspruch 1 oder 2, **dadurch gekennzeichnet, dass** die Annäherungssensorik (3) derart ausgebildet ist, dass diese genau einen Überwachungsraum (14) überwacht.

4. Anzeige- und Bedieneinrichtung nach einem der vorangegangenen Ansprüche, **dadurch gekennzeichnet, dass** die Annäherungssensorik (3) als IR-Annäherungssensorik ausgebildet ist.

5. Anzeige- und Bedieneinrichtung nach einem der vorangegangenen Ansprüche, **dadurch gekennzeichnet, dass** die Annäherungssensorik (3) eine Sichtblende (6) mit einer Optik (7) umfasst.

6. Anzeige- und Bedieneinrichtung nach Anspruch 4 und 5, **dadurch gekennzeichnet, dass** die Optik (7) derart ausgebildet ist, dass emittierte IR-Strahlung in den Überwachungsraum (14) gestreut und empfangene IR-Strahlung zu mindestens einer Empfangseinrichtung geleitet wird.

7. Anzeige- und Bedieneinrichtung nach einem der Ansprüche 4 bis 6, **dadurch gekennzeichnet, dass** die Annäherungssensorik (3) mit mindestens einer Referenzdiode (11) ausgebildet ist.

8. Anzeige- und Bedieneinrichtung nach einem der vorangegangenen Ansprüche, **dadurch gekennzeichnet, dass** die Anzeige- und Bedieneinrichtung (1) derart ausgestaltet ist, dass auf der Anzeigeeinheit (2) in Abhängigkeit von einem eindringenden Objekt (15) von einer Anzeigedarstellung auf eine Bediendarstellung gewechselt wird.

9. Verfahren zur Ansteuerung einer Anzeige- und Bedieneinrichtung (1), die eine Anzeigeeinheit (2) und mindestens eine Annäherungssensorik (3) umfasst, wobei mittels der Annäherungssensorik (3) ein Eindringen eines Objekts (15) in mindestens einen Überwachungsraum (14) erfasst wird, wobei mindestens eine Darstellung auf der Anzeigeeinheit (2) in Abhängigkeit eines eindringenden Objekts (15) verändert wird, **dadurch gekennzeichnet, dass**
eine zeitliche Abfolge von Empfangssignalen (P) der Annäherungssensorik (3) von einer Einheit (4) ausgewertet wird, wobei ein gleichbleibendes Empfangssignal (P) innerhalb eines vorgegebenen Zeitintervalls (tg) erfasst und gespeichert wird und für eine nachfolgende Ansteuerung der Anzeigeeinheit (2) als statisches Empfangssignal (Ps) ignoriert, wobei eine Änderung der Darstellung nur durchgeführt wird, wenn ein nachfolgendes Empfangssignal (P) das statische Empfangssignal (Ps) um einen vorgegebenen Wert überschreitet.

10. Verfahren nach Anspruch 9, **dadurch gekennzeichnet, dass** bei einer Verkleinerung des Empfangssignals (P) gegenüber einem zuvor erfassten statischen Empfangssignal (Ps) um einen vorgegebenen Wert der zuvor erfasste statische Wert gelöscht wird.

11. Verfahren nach Anspruch 9 oder 10, **dadurch gekennzeichnet, dass** die Annäherungssensorik (3) genau einen Überwachungsraum (14) überwacht.

12. Verfahren nach einem der Ansprüche 9 bis 11, **dadurch gekennzeichnet, dass** die Annäherungssensorik (3) als IR-Annäherungssensorik ausgebildet ist, die eine Sichtblende (6) mit einer Optik (7) umfasst, wobei durch die Optik (7) emittierte IR-Strahlung in den Überwachungsraum (14) gestreut und empfangene IR-Strahlung zu mindestens einer Empfangseinrichtung geleitet wird.

13. Verfahren nach Anspruch 12, **dadurch gekennzeichnet, dass** die Annäherungssensorik (3) mit IR-Sendedioden (9), mindestens einer IR-Empfangsdiode (10) und einer Referenzdiode (11) ausgebildet ist, wobei aus den Empfangssignalen an der IR-Empfangsdiode (10) aufgrund der Emission der Referenzdiode (11) auf die Emissionscharakteristik der IR-Sendedioden (9) geschlossen wird.

14. Verfahren nach einem der Ansprüche 9 bis 13, **dadurch gekennzeichnet, dass** auf der Anzeigeeinheit (2) in Abhängigkeit von einem eindringenden Objekt (15) von einer Anzeigedarstellung auf eine Bediendarstellung gewechselt wird.

## Claims

1. Displaying and operating device (1), comprising a display unit (2) and at least one proximity sensor system (3), wherein penetration of an object (15) into at least one monitoring space (14) can be detected by means of the proximity sensor system (3), wherein at least one representation on the display unit (2) is altered depending on a penetrating object (15),
**characterized in that**
the displaying and operating device (1) comprises a unit (4) configured in such a way that a temporal sequence of reception signals (P) of the proximity sensor system (3) is evaluated by the unit (4), wherein a constant reception signal (P) within a predefined time interval (tg) is detected and stored and for a subsequent control is ignored as a static reception signal (Ps) of the display unit (2), wherein a change in the representation is carried out only if a subsequent reception signal (P) exceeds the static reception signal (Ps) by a predefined value.

2. Displaying and operating device according to Claim 1, **characterized in that** the unit (4) is designed in such a way that in the event of a decrease in the reception signal (P) relative to a previously detected static reception signal (Ps) by a predefined value, the previously detected static value is erased.

3. Displaying and operating device according to Claim 1 or 2, **characterized in that** the proximity sensor system (3) is designed in such a way that the latter monitors exactly one monitoring space (14).

4. Displaying and operating device according to any of the preceding claims, **characterized in that** the proximity sensor system (3) is designed as an IR proximity sensor system.

5. Displaying and operating device according to any of the preceding claims, **characterized in that** the proximity sensor system (3) comprises a screen (6) with an optical element (7).

6. Displaying and operating device according to Claims 4 and 5, **characterized in that** the optical element (7) is designed in such a way that emitted IR radiation is scattered into the monitoring space (14) and received IR radiation is guided to at least one receiving device.

7. Displaying and operating device according to any of Claims 4 to 6, **characterized in that** the proximity sensor system (3) is designed with at least one reference diode (11).

8. Displaying and operating device according to any of the preceding claims, **characterized in that** the displaying and operating device (1) is configured in such a way that a change is made from a displaying representation to an operating representation on the display unit (2) depending on a penetrating object (15).

9. Method for controlling a displaying and operating device (1) comprising a display unit (2) and at least one proximity sensor system (3), wherein penetration of an object (15) into at least one monitoring space (14) is detected by means of the proximity sensor system (3), wherein at least one representation on the display unit (2) is altered depending on a penetrating object (15),
**characterized in that**
a temporal sequence of reception signals (P) of the proximity sensor system (3) is evaluated by a unit (4), wherein a constant reception signal (P) within a predefined time interval (tg) is detected and stored and for a subsequent control is ignored as a static reception signal (Ps) of the display unit (2), wherein a change in the representation is carried out only if a subsequent reception signal (P) exceeds the static reception signal (Ps) by a predefined value.

10. Method according to Claim 9, **characterized in that** in the event of a decrease in the reception signal (P) relative to a previously detected static reception signal (Ps) by a predefined value, the previously detected static value is erased.

11. Method according to Claim 9 or 10, **characterized in that** the proximity sensor system (3) monitors exactly one monitoring space (14).

12. Method according to any of Claims 9 to 11, **characterized in that** the proximity sensor system (3) is designed as an IR proximity sensor system comprising a screen (6) with an optical element (7), wherein, by means of the optical element (7), emitted IR radiation is scattered into the monitoring space (14) and received IR radiation is guided to at least one receiving device.

13. Method according to Claim 12, **characterized in that** the proximity sensor system (3) is designed with IR transmitting diodes (9), at least one IR receiving diode (10) and a reference diode (11), wherein the emission characteristic of the IR transmitting diodes (9) is deduced from the reception signals at the IR receiving diode (10) on the basis of the emission of the reference diode (11).

14. Method according to any of Claims 9 to 13, **characterized in that** a change is made from a displaying representation to an operating representation on the display unit (2) depending on a penetrating object (15).

## Revendications

1. Dispositif d'affichage et de commande (1) comprenant une unité d'affichage (2) et au moins un détecteur de présence (3), au moyen du détecteur de présence (3), une pénétration d'un objet (15) dans au moins un espace supervisé (14) étant détectable, au moins une représentation sur l'unité d'affichage (2) variant en fonction d'un objet (15) pénétrant,
**caractérisé en ce que**
le dispositif d'affichage et de commande (1) comprend une unité (4) qui est conçue de telle sorte qu'une séquence dans le temps de signaux de réception (P) du capteur de présence (3) est évaluée par l'unité (4), un signal de réception (P) constant étant détecté dans un intervalle de temps (tg) prédéfini et mémorisé et pour une activation suivante étant ignoré en tant que signal de réception statique (Ps) de l'unité d'affichage (2), une variation de la représentation n'étant entreprise que si un signal de réception (P) suivant dépasse le signal de réception statique (Ps) d'une valeur prédéfinie.

2. Dispositif d'affichage et de commande selon la revendication 1, **caractérisé en ce que** l'unité (4) est conçue de telle sorte que lors d'une diminution d'une valeur prédéfinie du signal de réception (P) par rapport à un signal de réception statique (Ps) précédemment détecté, la valeur statique précédemment détectée est effacée.

3. Dispositif d'affichage et de commande selon la revendication 1 ou la revendication 2, **caractérisé en ce que** le détecteur de présence (3) est conçu de sorte à superviser exactement un espace à superviser (14).

4. Dispositif d'affichage et de commande selon l'une quelconque des revendications précédentes, **caractérisé en ce que** le détecteur de présence (3) est conçu en tant que détecteur de présence à IR.

5. Dispositif d'affichage et de commande selon l'une quelconque des revendications précédentes, **caractérisé en ce que** le détecteur de présence (3) comprend un cache (6) avec un système optique (7).

6. Dispositif d'affichage et de commande selon la revendication 4 et la revendication 5, **caractérisé en ce que** le système optique (7) est conçu de telle sorte qu'un rayonnement IR émis soit dispersé dans l'espace à superviser (14) et qu'un rayonnement IR réceptionné soit dirigé vers au moins un dispositif de réception.

7. Dispositif d'affichage et de commande selon l'une quelconque des revendications 4 à 6, **caractérisé en ce que** le détecteur de présence (3) est conçu avec au moins une diode de référence (11).

8. Dispositif d'affichage et de commande selon l'une quelconque des revendications précédentes, **caractérisé en ce que** le dispositif d'affichage et de commande (1) est conçu de telle sorte qu'en fonction d'un objet (15) pénétrant, l'unité d'affichage (2) passe d'une représentation d'affichage à une représentation de commande.

9. Procédé destiné à activer un dispositif d'affichage et de commande (1) qui comprend une unité d'affichage (2) et au moins un détecteur de présence (3), au moyen du détecteur de présence (3), une pénétration d'un objet (15) dans au moins un espace à superviser (14) étant détectée, au moins une représentation sur l'unité d'affichage (2) variant en fonction d'un objet (15) pénétrant, **caractérisé en ce qu'**une séquence dans le temps de signaux de réception (P) du détecteur de présence (3) est évaluée par une unité (4), un signal de réception (P) constant étant détecté dans un intervalle de temps (tg) prédéfini et mémorisé et pour une activation suivante de l'unité d'affichage (2) étant ignoré en tant que signal de réception statique (Ps), une variation de la représentation n'étant entreprise que si un signal de réception (P) suivant dépasse le signal de réception statique (Ps) d'une valeur prédéfinie.

10. Procédé selon la revendication 9, **caractérisé en ce que** lors d'une diminution d'une valeur prédéfinie du signal de réception (P) par rapport à un signal de réception statique (Ps) précédemment détecté, la valeur précédemment détectée est effacée.

11. Procédé selon la revendication 9 ou la revendication 10, **caractérisé en ce que** le détecteur de présence (3) supervise exactement un espace à superviser (14).

12. Procédé selon l'une quelconque des revendications 9 à 11, **caractérisé en ce que** le détecteur de présence (3) est conçu en tant que détecteur de présence à IR qui comprend un cache (6) avec un système optique (7), un rayonnement IR émis par le système optique (7) étant disséminé dans l'espace à superviser (14) et un rayonnement IR réceptionné étant dirigé vers au moins un dispositif de réception.

13. Procédé selon la revendication 12, **caractérisé en ce que** le détecteur de présence (3) est conçu avec des diodes émettrices (9) à IR, au moins une diode réceptrice (10) à IR et une diode de référence (11), la caractéristique d'émission des diodes émettrices (9) à IR étant déduite des signaux de réception sur la diode réceptrice (10) à IR, sur la base de l'émission de la diode de référence (11).

14. Procédé selon l'une quelconque des revendications 9 à 13, **caractérisé en ce qu'**en fonction d'un objet (15) pénétrant, l'unité d'affichage (2) passe d'une représentation d'affichage à une représentation de commande.
